Europäisches Patentamt

European Patent Office

Office européen des brevets

(19)

(11) Veröffentlichungsnummer: **0 130 176**
**B1**

(12) # EUROPÄISCHE PATENTSCHRIFT

(45) Veröffentlichungstag der Patentschrift:
04.01.89

(21) Anmeldenummer: **84890110.4**

(22) Anmeldetag: **06.06.84**

(51) Int. Cl.⁴: **F 16 C 33/24, C 21 D 1/06**

(54) Gleitlager.

(30) Priorität: **23.06.83 AT 2302/83**

(43) Veröffentlichungstag der Anmeldung:
**02.01.85 Patentblatt 85/1**

(45) Bekanntmachung des Hinweises auf die Patenterteilung:
**04.01.89 Patentblatt 89/1**

(84) Benannte Vertragsstaaten:
**CH DE FR GB IT LI SE**

(56) Entgegenhaltungen:
**EP-A-0 057 808**
**DE-A-1 815 683**
**DE-A-2 362 026**
**DE-C-688 246**

(73) Patentinhaber: **MIBA Gleitlager Aktiengesellschaft,
Hauptstrasse 3, A-4663 Laakirchen (AT)**

(72) Erfinder: **Ehrentraut, Otto, Sudetenplatz 1, A-4810
Gmunden (AT)**
Erfinder: **Ederer, Ulf Gerhard, Dipl.- Ing.,
Dürerstrasse 16, A-4663 Laakirchen (AT)**

(74) Vertreter: **Hübscher, Gerhard, Dipl.- Ing.,
Patentanwälte Dipl.- Ing. Gerhard Hübscher
Dipl.- Ing. Helmut Hübscher Dipl.- Ing. Heiner
Hübscher Spittelwiese 7, A-4020 Linz (AT)**

**Beschreibung**

Die Erfindung bezieht sich auf ein Gleitlager, bestehend aus einer tragenden Stützschale und aus einer auf der Stützschale aufgebrachten Lagermetallschicht, die über die Laufflächenbreite verteilte, sich zumindest im wesentlichen in Laufrichtung erstreckende Laufflächenzonen bildet, zwischen denen Laufflächenzonen mit einer gegenüber der Lagermetallschicht unterschiedlichen Härte vorgesehen sind.

Um die Vorteile eines härteren Lagerwerkstoffes mit dem Vorteil weicherer Lagerwerkstoffe in einem Gleitlager zu verbinden, ohne die jeweiligen Nachteile dieser Werkstoffe in Kauf nehmen zu müssen, ist es bekannt (EP-A-0 057 808), den weicheren Lagerwerkstoff in nutenartige Ausnehmungen der härteren Lagermetallschicht einzubetten, wobei sich die nutenartigen Ausnehmungen zumindest im wesentlichen in Laufrichtung erstrecken. Da zusätzlich durch eine Begrenzung des Abstandes benachbarter Ausnehmungen für eine feine Verteilung des härteren und weicheren Lagerwerkstoffes über die Laufflächenbreite gesorgt ist, können die einzelnen Lagerwerkstoffe auch in einem örtlichen Belastungsbereich nicht für sich, sondern nur in einer Kombination wirksam werden, so daß die Nachteile der einzelnen Lagerwerkstoffe im wesentlichen ausgeschaltet sind. Die Lagermetallschicht aus einem härteren Werkstoff übernimmt dabei eine Stützfunktion, die eine relative Entlastung des weicheren Werkstoffes bedingt, was eine Erhöhung der Dauerfestigkeit und der Verschleißfestigkeit zur Folge hat. Derartige Gleitlager verhalten sich deshalb weitgehend wie Lager mit einer durchgehenden Laufschicht aus einem weicheren Lagerwerkstoff, besitzen solchen Lagern gegenüber jedoch den Vorteil eines erheblich geringeren Verschleißes. Trotzdem sind diese Lager nicht für alle Anwendungsfälle gleich gut geeignet. Wird eine gute Anpassung an größere Verformungen verlangt, so kann die härtere Lagermetallschicht die notwendige Verformung nicht sicherstellen. Es muß folglich auf herkömmliche Lager mit einer weicheren Lagermetallschicht ausgewichen werden, die allerdings keine befriedigenden Eigenschaften hinsichtlich der Verschleißfestigkeit gewährleisten kann.

Zum Härten von Lagerschalen aus Eisenlegierungen ist es bekannt (DE-C-688 246), die Lauffläche mit Hilfe eines Schweißbrenners streifenweise zu erhitzen und unmittelbar danach abzuschrecken, so daß zwischen den harten Streifen der weiche Grundwerkstoff der Lagerschale erhalten bleibt. Mit solchen Lagern wird jedoch eine Anpassung an eine höhere Verformung zwangsläufig ausgeschlossen, weil die sonst zum Einsatz kommenden, weicheren Lagermetalle durch eine von vornherein härtere Eisenlegierung ersetzt werden. Die zonenweise Härtung, die die Anpassungsfähigkeit herabsetzt, soll lediglich die bei den bekannten Lagermetallen gegebene Wirkung der harten und weichen Bestandteile sicherstellen, die durch Ausscheidung der verschiedenen Kristalle beim Abkühlen nach dem Guß entstehen. Da bei einem gattungsgemäßen Gleitlager jedoch bereits eine Lagermetallschicht vorliegt, kann der Ersatz dieser Lagermetallschicht durch eine besonders behandelte Eisenlegierung keine verbesserte Anpassungsfähigkeit an größere Verformungen mit sich bringen.

Zur Oberflächenhärtung von Werkstücken aus Aluminium oder Aluminiumlegierungen ist es schließlich bekannt (DE-A-2 362 026), ein Übergangsmetall in die Oberfläche einzuschmelzen, um über die sich bei einer hohen Erstarrungsgeschwindigkeit bildenden intermetallischen Phasen eine entsprechende Härtesteigerung zu erreichen. Als Übergangsmetalle werden dabei Metalle eingesetzt, die sich nicht als Lagerwerkstoffe eignen, weil bei Gleitlagern stets die Lagerschalen, nicht aber die zu lagernde Welle einen Verschleißteil bilden dürfen.

Der Erfindung liegt somit die Aufgabe zugrunde, ein Gleitlager zu schaffen, das trotz einer Anpassungsfähigkeit an höhere Verformungen eine hohe Verschleißfestigkeit aufweist.

Ausgehend von einem Gleitlager der eingangs geschilderten Art löst die Erfindung die gestellte Aufgabe dadurch, daß die zwischen den Laufflächenzonen der Lagermetallschicht vorgesehenen Laufflächenzonen eine größere Härte als die Lagermetallschicht aufweisen.

Durch diese Maßnahme wird eine Lauffläche erhalten, die durch abwechselnde Zonen größerer und kleinerer Härte gekennzeichnet ist und auf Grund dieser Zusammensetzung die gleichen Gleit- und Verschleißeigenschaften wie die Lauffläche der für hohe Beanspruchungen gebauten Gleitlager aufweist, die eine Lagermetallschicht aus einen härteren Lagerwerkstoff besitzen, weil diese Gleit- und Verschleißeigenschaften ja lediglich von der Ausbildung der Lauffläche abhängen. Der weichere Werkstoff der Lagermetallschicht erlaubt allerdings eine größere Verformung, so daß trotz der hohen Verschleißfestigkeit die hinsichtlich der Anpassungsfähigkeit vorteilhaften Eigenschaften von Lagern mit einer durchgehenden Laufschicht aus einem weicheren Lagerwerkstoff erhalten werden.

Die Laufflächenzonen größerer Härte können aus Einlagerungen, beispielsweise eines mit Metallpulver versetzten Kunststoffes, in nutenartige Ausnehmungen der weicheren Lagermetallschicht bestehen. Das Metallpulver als Füllstoff macht dabei den Kunststoff verschleißfest und hart, wobei zur Verbesserung der Gleiteigenschaften noch Trockenschmiermittel eingebaut werden könnten. Die ausreichende Wärmeabfuhr auch aus Bereichen höherer örtlicher Belastung bleibt in einem solchen Fall gesichert, weil die Einlagerungen in die einen guten Wärmeleiter darstellende Lagermetallschicht eingebettet sind.

Eine andere Möglichkeit zur Bildung von Laufflächenzonen größerer Härte besteht darin, die Laufflächenzonen mit der größeren Härte aus gehärteten Zonen der Lagermetallschicht zu bilden. Durch eine zonenweise Härtung der Lagermetallschicht kann eine einfache Herstellung sichergestellt und das sonst bei einer galvanischen Ablagerung auftretende Grenzschichtproblem vermieden werden.

Schließlich können die Laufflächenzonen mit der größeren Härte aus Zonen der Lagermetallschicht bestehen, in die härtere Werkstoffe eingeschmolzen sind. Mit einem solchen Einschmelzen von Legierungskwerkstoffen kann ebenfalls die weichere Lagermetallschicht zonenweise so verändert werden, daß sich härtere Lauffläschenzonen ergeben, ohne einen härteren Lagerwerkstoff in nutenartige Ausnehmungen einbetten zu müssen.

In der Zeichnung ist der Erfindungsgegenstand beispielsweise dargestellt. Es zeigen

Fig. 1   ein erfindungsgemäßen Gleitlager in einer Draufsicht auf die Lauffläche,
Fig. 2   ein solches Gleitlager in einer Querschnitt und
Fig. 3   eine Konstruktionsvariante eines erfindungsgemäßen Gleitlagers in einem Querschnitt durch die Lagermetallschicht in eine größeren Maßstab.

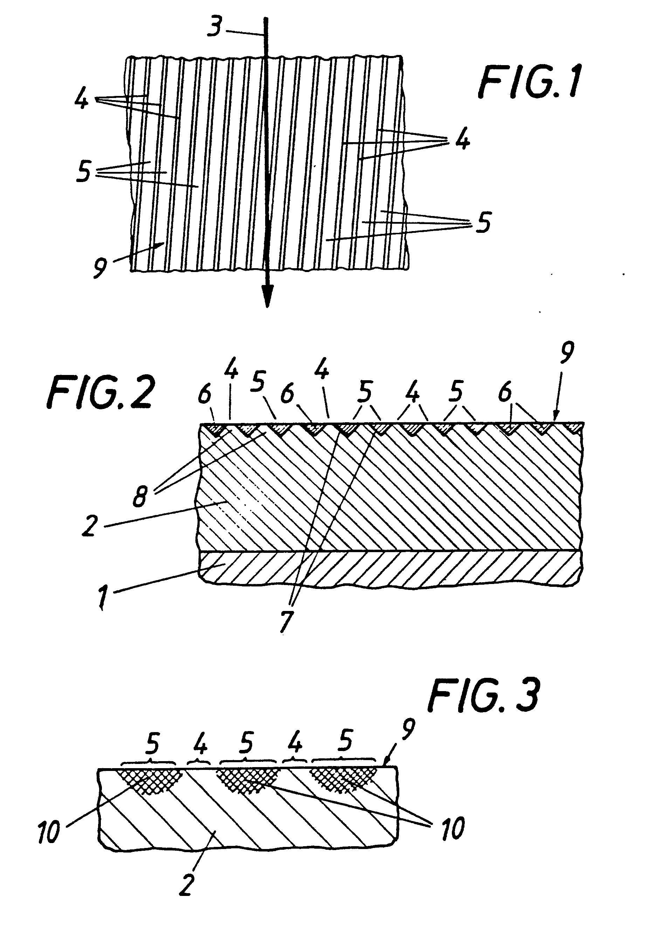

Gemäß den Fig. 1 und 2 besteht das dargestellte Gleitlager aus einer stählernen Stützschale 1 und aus einer auf der Stützschale 1 aufgebrachten Lagermetallschicht 2, die über die Laufflächenbreite verteilte, sich im wesentlichen in Laufrichtung 3 erstreckende Laufflächenzonen 4, 5 aufweist. Die Laufflächenzonen 5 ergeben sich dabei durch Einlagerungen 6 in nutenartigen Ausnehmungen 7 der Lagermetallschicht 2, die mit den zwischen den Einlagerungen 6 verbleibenden Stegen 8 die Zonen 4 der Lauffläche 9 bilden. Zum unterschied zu bekannten Gleitlagern dieser Art sind die Einlagerungen 6 jedoch härter als die Lagermetallschicht 2, die beispielsweise aus einer Aluminium-Zinnlegierung mit 40 bis 60 Gew.-% Zinn bestehen kann, so daß durch diese vergleichsweise weiche Lagermetallschicht 2 eine gute Anpassung an größere Verformungen sichergestellt wird. Die angestrette Verschleißfestigkeit wird durch die Einlagerungen 6 erreicht, die gegenüber der Lagermetallschicht 2 eine größere Härte aufweisen und z. B. aus einem Kunststoff bestehen, der durch einen hohen Anteil an Metallpulver verschleißfest und hart eingestellt worden ist.

In Fig. 3 ist eine Konstruktionsvariante dargestellt, bei der die Laufflächenzonen 5 durch ein Einschmelzen eines härteren Verkstoffes gebildet werden. Durch das zonenweise Einschmelzen geeigneter Legierungswerkstoffe werden Zonen 10 der Lagermetallschicht 2 mit einer erheblich größeren Härte erhalten. Zur Herstellung dieser Zonen 10 kann der Legierungswerkstoff zunächst auf die gesamte Lauffläche 9 aufgebracht und dann zonenweise eingeschmolzen werden, bevor er wieder abgetragen wird. Es verbleiben dann die in Fig. 3 dargestellten Einschmelzzonen 10 im Bereich der Lauffläche 9. An Stelle eines solchen Einschmelzens von Legierungswerkstoffen kann auch eine zonenweise Härtung, beispielsweise durch ein Umschmelzen, treten. Die zonenweise Wärmebehandlung kann vorteilhaft mit Hilfe eines Laser- oder Elektronenstrahles erzielt werden.

## Patentansprüche

1. Gleitlager, bestehend aus einer tragenden Stützschale (1) und aus einer auf der Stützschale (1) aufgebrachten Lagermetallschicht (2), die über die Laufflächenbreite verteilte, sich zumindest im wesentlichen in Laufrichtung (3) erstreckende Laufflächenzonen (4) bildet, zwischen denen Laufflächenzonen (5) mit einer gegenüber der Lagermetallschicht (2) unterschiedlichen Härte vorgesehen sind, dadurch gekennzeichnet, daß die zwischen den Laufflächenzonen (4) der Lagermetallschicht (2) vorgesehenen Laufflächenzonen (5) eine größere Härte als die Lagerretallschicht (2) aufweisen.

2. Gleitlager nach Anspruch 1, dadurch gekennzeichnet, dar die Laufflächenzonen (5) mit der größeren Härte zus Einlagerungen (6), beispielsweise eines mit Metallpulver versetzten Kunststoffes, in nutenartige Ausnehmungen (7) der weicheren Lagermetallschicht (2) bestehen.

3. Gleitlager nach Anspruch 1, dadurch gekennzeichnet, daß die Laufflächerzonen (5) mit der größeren Härte aus gehärteten Zonen der Lagermetallschicht (2) bestehen.

4. Gleitlager nach Anspruch 1, dadurch gekennzeichnet, daß die Laufflächenzonen (5) mit der größeren Härte aus Zonen (10) der Lagermetallschicht (2) bestehen, in die härtere Werkstoffe eingeschmolzen sind.

## Claims

1. A sliding surface bearing consisting of a carrying backing shell (1) and of a bearing metal layer (2), which has been applied to the backing shell (1) and forms sliding surface zones (4), which are distributed over the width of the sliding surface and extend at least substantially in the direction of movement (3), wherein sliding surface zones (5) differing in hardness from the bearing metal layer (2) are disposed between the sliding surface zones (4) of the bearing metal layer, characterized in that the sliding surface zones (5) disposed between the sliding surface zones (4) of the bearing metal layer (2) have a higher hardness than the bearing metal layer (2).

2. A sliding surface bearing according to claim 1, characterized in that the sliding surface zones (5) having the higher hardness consist of inclusions (6), e.g. of a plastic to which a metal powder has been admixed, in groovelike recesses (7) of the softer bearing metal layer (2).

3. A sliding surface bearing according to claim 1, characterized in that the sliding surface zones (5) having the higher hardness consist of hardened zones of the bearing metal layer (2).

4. A sliding surface bearing according to claim 1, characterized in that the sliding surface zones (5) having the higher hardness consist of zones (10) of the bearing metal layer (2) which contain fused-in harder materials.

## Revendications

1. Palier lisse se composant d'une coquille d'appui (1) porteuse et d'une couche (2) de métal anti-friction déposée sur la coquille d'appui (1) en formant des zones (4) de surface de glissement, qui sont réparties sur la largeur de la surface de glissement et s'étendent au moins essentiellement dans le sens (3) du glissement, entre lesquelles sont prévues des zones (5) de surface de glissement présentant une dureté différant de celle de la couche (2) de métal anti-friction, caractérisé par le fait que les zones (5) de surface de glissement, prévues entre les zones (4) de surface de glissement de la couche (2) de métal anti-friction, présentent une dureté plus grande que la couche (2) de métal anti-friction.

2. Palier lisse selon la revendication 1, caractérisé par le fait que les zones (5) de surface de glissement ayant une dureté plus élevée se composent d'incrustations (6), par exemple d'une matière plastique additionnée d'une poudre métallique, dans des évidements (7) du genre rainures de la couche (2) moins dure de métal anti-friction.

3. Palier lisse selon la revendication 1, caractérisé par le fait que les zones (5) de surface de glissement ayant une dureté plus élevée se composent de zones trempées de la couche (2) de métal anti-friction.

4. Palier lisse selon la revendication 1, caractérisé par le fait que les zones (5) de surface de glissement ayant une dureté plus élevée se composent de zones (10) de la couche (2) de métal anti-friction dans lesquelles sont inclus, par coulée, des matériaux plus durs.

*FIG.1*

*FIG.2*

*FIG.3*